# FASCICULE DE BREVET EUROPEEN

(11) **EP 0 996 353 B1**
(45) Date de publication et mention de la délivrance du brevet: **27.02.2002**
(21) Numéro de dépôt: 98937612.4
(22) Date de dépôt: 10.07.1998
(51) Int. Cl.: A47J 39/00, F25B 17/08

(54) **CHARIOT COMPORTANT UN DISPOSITIF DE REFROIDISSEMENT POUVANT ETRE MIS EN OEUVRE A L'INSTANT CHOISI PAR L'UTILISATEUR**
WAGEN MIT EINER KÜHLVORRICHTUNG DIE ZU EINEM VOM BENUTZER GEWÄHLTEN ZEITPUNKT GESTARTET WERDEN KANN
TROLLEY COMPRISING A COOLING DEVICE CAPABLE OF BEING USED AT WILL BY THE USER

(30) Priorité: 16.07.1997 FR 9709018
(43) Date de publication de la demande: 03.05.2000
(73) Titulaire: Societe de Constructions de Materiel Metallique et Electrique-Socamel, 38140 Renage (FR)
(72) Inventeur: GEORGES, René, F-38700 La Tronche (FR)
(74) Mandataire: Eidelsberg, Victor Albert
(86) Numéro de dépôt international: FR9801504
(87) Numéro de publication internationale: WO9903387

(56) Documents cités:
- WO-A-97/09575
- FR-A- 693 092
- FR-A- 887 995
- FR-A- 982 202
- FR-A- 2 393 246
- FR-A- 2 420 947
- FR-A- 2 684 281
- FR-A- 2 721 696
- US-A- 4 138 504
- US-A- 5 159 973

## Description

L'invention se rapporte aux chariots et plus particulièrement aux chariots de transport de plateaux repas, utilisés notamment dans les hôpitaux et maisons de retraites et les transports en commun.

On connaît déjà par le FR-A-2 684 281 et par le WO-97/09575 un chariot de ce genre, qui comprend une caisse à paroi thermiquement isolante à l'intérieur de laquelle sont montés des plateaux repas. Il est prévu des moyens de définition d'une première zone et d'une seconde zone, ces moyens de définition peuvent être une cloison thermiquement isolante ou être une cloison virtuelle représentée par le fait que les plateaux repas sont recouverts d'une cloche en un matériau thermiquement isolant, l'ensemble des parties sous cloche d'un côté du chariot représentant la première zone et de l'autre côté la seconde zone. En général, la première zone est destinée à recevoir la partie des plateaux sur laquelle sont déposés des aliments destinés à être consommés froids. Il s'agit d'une zone qui doit être maintenue à une température basse, habituellement de 3°C environ. En revanche, la seconde zone est destinée à recevoir les aliments qui doivent être consommés chauds. Cette zone est maintenue d'abord à une température froide de 3°C par exemple, puis peu avant que le repas ne soit consommé, est portée à une température plus élevée, notamment de 65°C en sorte que les aliments sont réchauffés et peuvent être servis chauds. A cet effet, le chariot comporte un premier dispositif de refroidissement de la première zone, un second dispositif de refroidissement de la seconde zone et un dispositif de chauffage de la seconde zone.

L'inconvénient des chariots connus jusqu'ici est que les dispositifs de refroidissement par fluide réfrigérant ou absorption, tant de la première zone que de la seconde zone, entrent en action immédiatement dès qu'ils sont mis sur le chariot, quand bien même ils ne sont pas utiles à cet instant. Comme ils ont une capacité limitée à fournir des frigories. il faut les mettre sur le chariot au dernier instant ou s'accommoder d'une capacité à fournir des frigories moindre, en sorte que le chariot n'est apte à maintenir les aliments au froid que moins longtemps.

Suivant l'invention, chaque dispositif de refroidissement comprend un premier récipient d'un gaz et éventuellement d'un premier réactif solide apte à réagir sur le gaz et un second récipient d'un second réactif solide apte à réagir sur le gaz et, s'il est prévu un premier réactif solide, plus avide à réagir sur le gaz que le premier réactif solide, communiquant entre'eux par un conduit muni d'une vanne. Le premier récipient du premier dispositif de refroidissement est disposé dans la première zone, tandis que le deuxième récipient du premier dispositif de refroidissement est disposé en-dehors des deux zones. Le premier récipient du second dispositif de refroidissement est disposé dans la seconde zone tandis que le second récipient du second dispositif de refroidissement est disposé en-dehors des deux zones.

Ce n'est que lorsque l'on ouvre leur vanne que les dispositifs de refroidissement qui agissent par voie thermochimique entrent en action, en sorte que leur capacité à produire des frigories n'est utilisée qu'à bon escient.

Suivant un mode de réalisation particulièrement préféré, le dispositif de chauffage comprend un premier réservoir d'un gaz et éventuellement d'un premier produit solide apte à réagir sur le gaz et un second réservoir d'un second produit solide apte à réagir qui, s'il est prévu un premier produit solide, est plus avide à réagir sur le gaz que le premier produit solide, communiquant entre eux par un conduit muni d'une vanne, le second reservoir étant disposé en dehors des deux zones, tandis que le premier réservoir est disposé dans la seconde zone.

On obtient ainsi pour le dispositif de chauffage les mêmes avantages que pour les dispositifs de refroidissement, avec l'intérêt supplémentaire que le dispositif de chauffage étant dans ce cas entièrement autonome et embarqué sur le chariot, on peut le brancher à n'importe quel moment sans être tributaire d'une source d'énergie électrique à poste fixe. On peut commencer le chauffage pendant le transport des plateaux repas dans les chariots. Cela permet de diminuer les temps d'attente.

Le mode de réalisation défini à la revendication 4 permet de mieux individualiser le chauffage et le refroidissement des mets placés sur les divers plateaux et celui défini à la revendication 5 d'obtenir à la fois, au choix, un bon chauffage individuel ou un bon refroidissement individuel.

Le gaz peut être de l'ammoniac ou ses dérivés notamment des alcoylamines en C₁ à C₈, par exemple la monométhylamine, la diméthylamine, mais aussi de l'eau, du CO₂, du SO₂, du SO₃ ou de l'H₂. Le réactif solide adsorbant peut être un sel, tel qu'un halogénure, un pseudohalogénure, un carbone, un sulfate, un nitrate, un oxyde ou un nitrure métallique et qui, de préférence, est dans une matrice en graphite naturel expansé. L'endothermicité de la réaction donne le refroidissement souhaité. Comme métaux des sels constituants les réactifs solides, on peut utiliser notamment des sels de métaux alcalinoterreux, des sels de zinc, de manganèse, de fer et de nickel. On peut citer notamment comme sel MnCl₂, SrCl₂, SrBr₂ pour maintenir la température à 3°C et NiCl₂, MgCl₂, MgBr₂ et NiBr₂ pour maintenir la température à -20°C. Quand on prévoit des couples de réactifs ou produits solides, ce peut être par exemple NiCl₂, MgCl₂, MgBr₂, NiBr₂, NiCl₂, NiBr₂ selon les températures souhaitées.

Aux dessins annexés, donnés uniquement à titre d'exemple
la figure 1 est une vue en coupe d'un chariot suivant l'invention,
la figure 2 est une vue partielle en coupe d'une variante de chariot suivant l'invention,
la figure 3 est une vue en coupe suivant la ligne III-III de la figure 2, et
les figures 4 et 5 sont des vues en plan des dispositifs de refroidissement et de chauffage utilisés dans la variante de la figure 2.

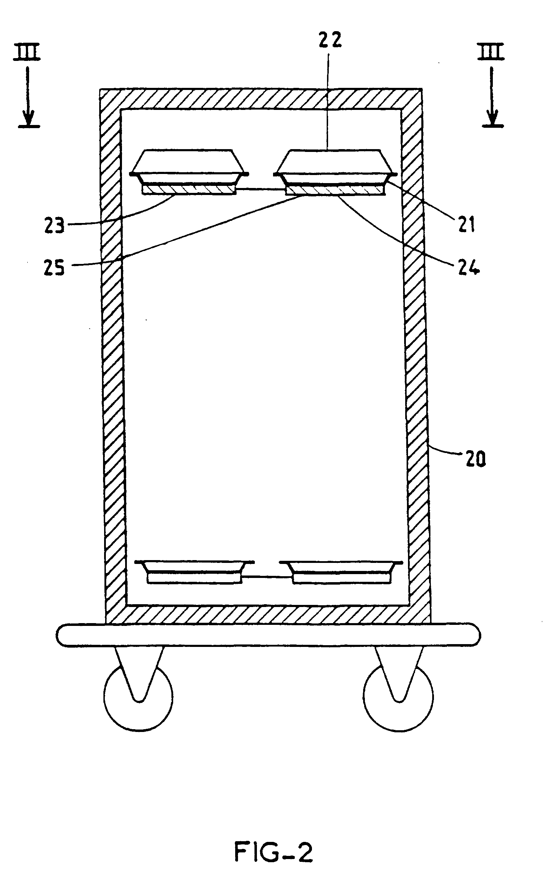

Le mode de réalisation selon la figure 2 est partiellement couvert par l'objet de la revendication indépendante.

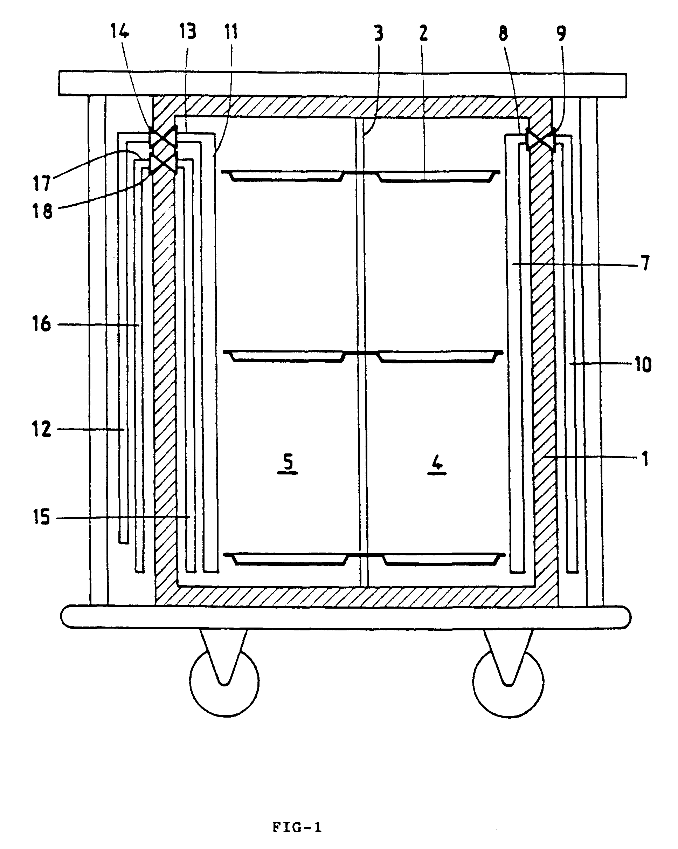

Le chariot représenté à la figure 1 comporte une caisse 1 à paroi thermiquement isolante à l'intérieur de laquelle sont montés des plateaux repas 2. Les plateaux s'étendent horizontalement en étant superposés. Ils passent à travers une cloison 3 thermiquement isolante, en sorte que chaque plateau comporte un alvéole se trouvant dans une zone 4 froide et un alvéole se trouvant dans une zone 5 dénommée froide/chaude parce qu'elle doit être maintenue d'abord à une température froide puis portée, par exemple à 65°C. A cet effet, il est prévu, de chaque côté de la caisse 1, des dispositifs de refroidissement qui s'étendent en dehors du plan de la figure 1.

Le dispositif de refroidissement de la zone 4 froide comporte un premier récipient 7 empli de NH₃ et de BaCl₂. Ce premier récipient communique par un conduit 8 muni d'une vanne 9 avec un second récipient 10 empli de MnCl₂.

On retrouve, de même, du côté de la zone 5, un premier récipient 11 empli de BaCl₂ et un second récipient 12 empli de MnCl₂ communiquant entre eux par un conduit 13 muni d'une vanne 14 pour constituer le deuxième dispositif de refroidissement. A côté de ce dispositif de refroidissement se trouve également, uniquement du côté de la zone 5, un dispositif de chauffage comportant un réservoir 15 empli de MnCl₂ communiquant avec un réservoir 16 empli de BaCl₂ par l'intermédiaire d'un conduit 17 muni d'une vanne 18. La zone 4 est plus éloignée du récipient 10 que du récipient 7. La zone 5 est plus éloignée du récipient 12 que du récipient 11 et plus éloignée du réservoir 16 que du réservoir 15, les récipients 10 et 12 et le réservoir 16 étant en dehors du caisson, tandis que les autres récipient et réservoir sont à l'intérieur de celui-ci.

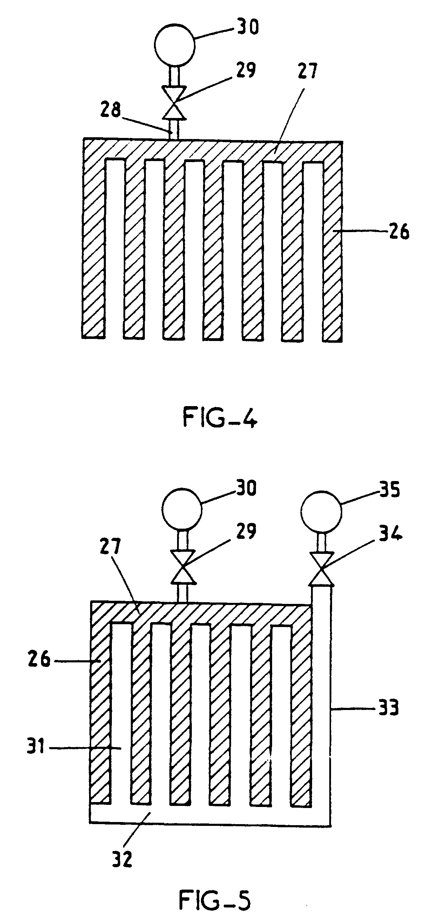

A la figure 2, le chariot comprend une caisse 20 à paroi thermiquement isolante à l'intérieur de laquelle sont montés des plateaux repas 21, seuls deux d'entre eux étant représentés. Chaque alvéole d'un plateau repas est recouvert d'une cloche 22 en matériau thermiquement isolant. Ces cloches déterminent, pour les alvéoles froids, d'une part, et chauds, d'autre part, de chaque plateau respectivement, une zone froide et une zone chaude. En dessous de chaque alvéole froid d'un plateau 21 est prévu un sous-récipient 23 affecté à ce plateau, tandis que sous l'alvéole chaud de ce même plateau est prévu un sous-récipient et un sous-réservoir 24, 25 interdigités comme représenté à la figure 5. La figure 4 représente l'un des sous-récipients 23. Ce sous-récipient 23 comporte sept doigts 26 reliés par un collecteur 27 à un conduit 28 muni d'une vanne 29 communiquant avec le réservoir 30. Le réservoir 30 contient du MnCl₂, tandis que le sous-récipient 23 contient du BaCl₂.

A la figure 5, on retrouve le même dispositif de refroidissement qu'à la figure 4, mais qui n'a que six doigts interdigités avec les cinq doigts 31 d'un réservoir d'un dispositif de chauffage dont le collecteur 32 communique par un conduit 33 et avec interposition d'une vanne 34 avec un réservoir 35 contenant du BaCl₂, tandis que le récipient 31, 32 contient du MnCl₂.

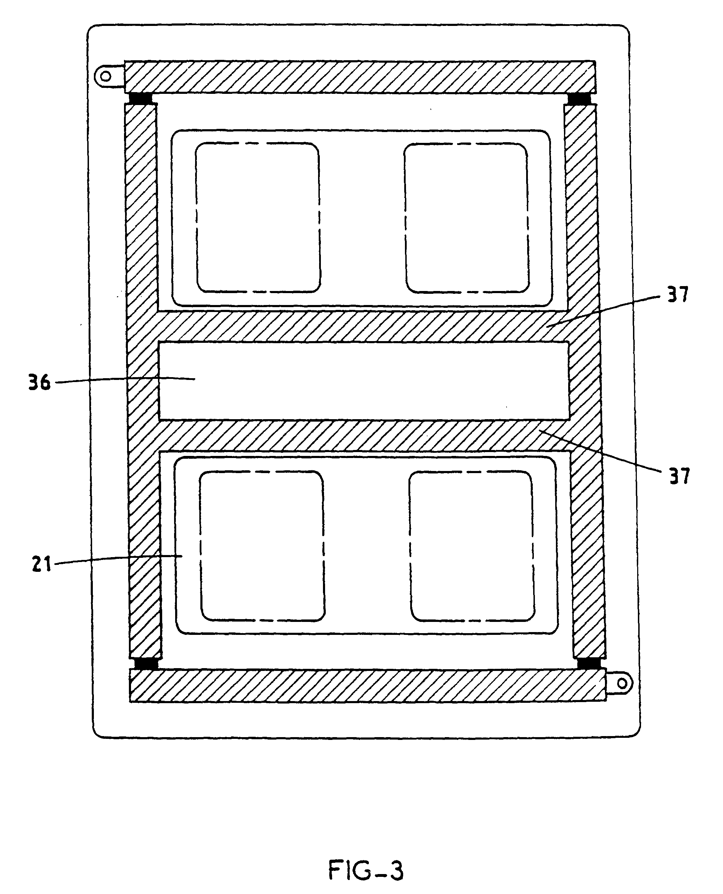

La figure 3 est une vue en coupe suivant la ligne III-III de la figure 2. On y reconnaît les plateaux repas 21 empilés de part et d'autre d'une gaine technique 36 dans laquelle sont logés les récipient et réservoir 30 et 35. Cette gaine technique est séparée des zones où se trouvent les plateaux par des cloisons 37 thermiquement isolantes.

Un autre mode de réalisation consiste à disposer le réservoir 16 dans la zone 4, ce qui permet de maintenir en froid cette zone 4 tandis que le réservoir 15 est dans la zone 5, à condition de couper le fonctionnement du dispositif 7,10, ce qui évite durant la remise en température de rejeter de la chaleur dans l'ambiance.

Chaque premier récipient et/ou premier réservoir s'étend sensiblement perpendiculairement aux plateaux.

Dans un procédé, on peut arrêter les moyens de chauffage en tournant une vanne.

## Revendications

1. Chariot comprenant une caisse (1) à paroi thermiquement isolante et à l'intérieur de laquelle sont montés des plateaux (2), comprenant des moyens (3) de définition d'une première zone (4) et d'une seconde zone (5), un premier dispositif de refroidissement de la première zone (4), un second dispositif de refroidissement de la seconde zone (5) et un dispositif de chauffage de la seconde zone (5), **caractérisé en ce que** les dispositifs de refroidissement comprennent chacun un premier récipient (7, 11) d'un gaz et éventuellement d'un premier réactif solide apte à réagir sur le gaz et un second récipient (10, 12) d'un second réactif solide apte à réagir sur le gaz et, s'il est prévu un premier réactif solide, plus avide à réagir sur le gaz que le premier réactif solide, communiquant entre eux par un conduit (8, 13) muni d'une vanne (9, 14), le premier récipient (7) du premier dispositif de refroidissement étant disposé dans la première zone (4), tandis que le second récipient (10) du premier dispositif de refroidissement est disposé en dehors des deux zones (4,5) le premier récipient (11) du second dispositif de refroidissement étant disposé dans le seconde zone (5), tandis que le second récipient (12) du second dispositif de refroidissement est disposé en dehors des deux zones.

2. Chariot suivant la revendication 1, **caractérisé en ce que** le dispositif de chauffage comprend un premier réservoir (15) d'un gaz et éventuellement d'un premier produit solide apte à réagir sur le gaz et un second réservoir (16) d'un second produit solide apte à réagir sur le gaz et s'il est prévu un premier produit solide; plus avide à réagir sur le gaz que le premier produit solide. communiquant entre eux par un conduit (17) muni d'une vanne (18), le second réservoir (16) étant disposé en dehors des deux zones (4,5), tandis que le premier réservoir (15) est disposé dans la seconde zone (5).

3. Chariot suivant la revendication 1 ou 2, **caractérisé en ce que** chaque premier recipient (7,11) et/ou premier réservoir (15) s'étend sensiblement perpendiculairement aux plateaux (2) qui sont disposés horizontalement.

4. Chariot suivant la revendication 1 ou 2, **caractérisé en ce que** chaque premier récipient (7,11) et/ou premier réservoir (15) est subdivisé en autant de sous-récipients et sous-réservoirs qu'il y a de plateaux, et un sous-récipient et/ou sous-réservoir est affecté à chaque plateau et s'étend parallèlement à ce plateau en dessous de celui-ci.

5. Chariot suivant l'une des revendications 2 à 4, **caractérisé en ce que** le premier récipient du second dispositif de refroidissement et le premier réservoir se présentent sous la forme de conduits en forme de doigts et le premier récipient du second dispositif de refroidissement et le premier réservoir sont interdigités.

## Patentansprüche

1. Wagen mit einem Gehäuse (1) aus wärmeisolierten Wänden und mit im Innenraum angeordneten Tabletts (2) mit Mitteln (3) zur Definition einer ersten Zone (4) und einer zweiten Zone (5), mit einer ersten Kühleinrichtung der ersten Zone (4), einer zweiten Kühleinrichtung der zweiten Zone (5) und einer Heizeinrichtung der zweiten Zone (5), **dadurch gekennzeichnet, dass** die Kühleinrichtungen jede einen ersten Behälter (7,11) für ein Gas und eventuell einen ersten reaktiven Feststoff zur Reaktion mit dem Gas und einen zweiten Behälter (10,12) für einen zweiten reaktiven Feststoff zur Reaktion mit dem Gas aufweist, der bei Vorhandensein eines ersten reaktiven Feststoffes reaktionsfreudiger als der erste reaktive Feststoff mit dem Gas ist, wobei die Behälter untereinander durch eine Leitung (8,13) mit einem Ventil (9,14) kommunizieren, wobei der erste Behälter (7) der ersten Kühleinrichtung in der ersten Zone (4) angeordnet ist, während der zweite Behälter (10) der ersten Kühleinrichtung außerhalb der zwei Zonen (4,5) angeordnet ist, wobei der erste Behälter (11) der zweiten Kühleinrichtung in der zweiten Zone (5) angeordnet ist, während der zweite Behälter (12) der zweiten Kühleinrichtung sich außerhalb der zwei Zonen befindet.

2. Wagen gemäß Anspruch 1, **dadurch gekennzeichnet, dass** die Heizeinrichtung ein erstes Behältnis (15) mit einem Gas und eventuell mit einem ersten Festprodukt zur Reaktion mit dem Gas und ein zweites Behältnis (16) eines zweiten Festproduktes zur Reaktion mit dem Gas aufweist, welches bei Vorhandensein eines ersten Festproduktes reaktionsfreudiger als das erste Festprodukt mit dem Gas ist, wobei die Behältnisse durch eine Leitung (17) mit einem Ventil (18) kommunizieren, wobei das zweite Behältnis (16) außerhalb der Zonen (4,5) angeordnet ist, während das erste Behältnis (15) sich in der Zone (5) befindet.

3. Wagen gemäß Anspruch 1 oder 2, **dadurch gekennzeichnet, dass** jeder erste Behälter (7,11) und/oder erstes Behältnis (15) sich im Wesentlichen senkrecht zu den horizontal angeordneten Tabletts (2) erstreckt.

4. Wagen gemäß Anspruch 1 oder 2, **dadurch gekennzeichnet, dass** jeder erste Behälter (7,11) und/oder erstes Behältnis (15) in so viele Unterbehälter oder Unterbehältnisse, wie vorhandene Tabletts unterteilt ist und ein Unterbehälter und/oder Unterbehältnis jedem Tablett zugeordnet ist und sich parallel sowie unterhalb des Tabletts erstreckt.

5. Wagen gemäß einem der Ansprüche 2 bis 4, **dadurch gekennzeichnet, dass** der erste Behälter der zweiten Kühleinrichtung und das erste Behältnis sich in Gestalt von fingerförmigen Kanälen präsentieren, und dass der erste Behälter der zweiten Kühleinrichtung und das erste Behältnis ineinandergreifen.

## Claims

1. Trolley comprising a casing (1) with a heat insulating partition and inside which are mounted plates (2), including means (3) for defining a first zone (4) and a second zone (5), a first cooling device for the first zone (4) and a second cooling device for the second zone (5) and a heating device for the second zone (5), **characterized in that** each of the cooling devices comprises a first container (7, 11) for a gas and optionally for a first solid reagent able to react with the gas and a second container (10, 12) for a second solid reagent able to react with the gas and which, if a first solid reagent is provided, is able to react more vigorously with the gas than the first solid reagent, communicating with each other via a conduit (8, 13) provided with a valve (9, 14), the first container (7) of the first cooling device being disposed in the first zone (4), whereas the second container (10) of the first cooling device is disposed outside the two zones (4,5), the first container (11) of the second cooling device being disposed in the second zone (5), whereas the second container (12) of the second cooling device is disposed outside the two zones.

2. Trolley according to claim 1, **characterized in that** the heating device comprises a first reservoir (15) for a gas and optionally for a solid product able to react with the gas and a second reservoir (16) for a second solid product able to react with the gas and which, if a first solid product is provided, is able to react more vigorously with the gas than the first solid product, communicating with each other via a conduit (17) provided with a valve (18), the second reservoir (16) being disposed outside the two zones (4,5), whereas the first reservoir (15) is disposed in the second zone (5).

3. Trolley according to claim 1 or 2. **characterized in that** each first container (7,11) and/or first resevoir (15) extends substantially perpendicularly to the plates (2) which are arranged horizontally.

4. Trolley according to claim 1 or 2, **characterized in that** each first container (7,11) and/or first reservoir (15) is subdivided into as many sub-containers and sub-reservoirs as there are plates, and a sub-container and/or sub-reservoir is assigned to each plate and extends parallel to this plate and below it.

5. Trolley according to one of claims 2 to 4, **characterized in that** the first container of the second cooling device and the first reservoir are in the form of conduits in the shape of fingers and the first container of the second cooling device and the first reservoir are interlaced.
